(19) Europäisches Patentamt / European Patent Office / Office européen des brevets

(11) **EP 4 056 959 B1**

(12) **EUROPÄISCHE PATENTSCHRIFT**

(45) Veröffentlichungstag und Bekanntmachung des Hinweises auf die Patenterteilung:
**13.08.2025   Patentblatt 2025/33**

(21) Anmeldenummer: **22170682.3**

(22) Anmeldetag: **07.03.2019**

(51) Internationale Patentklassifikation (IPC):
**G01F 1/58** *(2006.01)*       **G01F 25/10** *(2022.01)*

(52) Gemeinsame Patentklassifikation (CPC):
**G01F 1/58; G01F 25/10**

(54) **VERFAHREN ZUR AUSLEGUNG EINES MAGNETISCH-INDUKTIVEN DURCHFLUSSMESSGERÄTES**

METHOD FOR DESIGNING A MAGNETIC-INDUCTIVE FLOW METER

PROCÉDÉ DE CONCEPTION D'UN DÉBITMÈTRE MAGNÉTO-INDUCTIF

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität:  **06.04.2018   DE 102018108197**

(43) Veröffentlichungstag der Anmeldung:
**14.09.2022   Patentblatt 2022/37**

(62) Dokumentnummer(n) der früheren Anmeldung(en) nach Art. 76 EPÜ:
**19709906.2 / 3 775 791**

(73) Patentinhaber: **Endress+Hauser Flowtec AG**
**4153 Reinach (CH)**

(72) Erfinder: **Mariager, Simon**
**4059 Basel (CH)**

(74) Vertreter: **Endress + Hauser Group Services (Deutschland) AG+Co. KG**
**Colmarer Straße 6**
**79576 Weil am Rhein (DE)**

(56) Entgegenhaltungen:
WO-A1-2017/025314      DE-A1- 102011 079 352
DE-B- 1 227 677      US-A- 6 094 992
US-A1- 2010 107 776

**Beschreibung**

Die vorliegende Erfindung betrifft ein Verfahren zum Auslegen eines magnetisch-induktiven Durchflussmessgeräts umfassend mindestens zwei Elektrodenpaare zur Messung der Durchflussgeschwindigkeit oder des Volumendurchflusses eines Mediums mit einem rotationsunsymmetrischen Strömungsprofil. Magnetisch-induktive Durchflussmessgeräte werden zur Bestimmung der Durchflussgeschwindigkeit und des Volumendurchflusses eines Mediums in einem Messrohr eingesetzt. Ein magnetisch-induktives Durchflussmessgerät besteht aus einem Magnetsystem, das ein Magnetfeld senkrecht zur Flussrichtung des Mediums erzeugt. Dafür werden üblicherweise einzelne oder mehrere Spulen verwendet. Um ein überwiegend homogenes Magnetfeld zu realisieren, werden zusätzlich Polschuhe so geformt und angebracht, dass die Magnetfeldlinien über den gesamten Rohrquerschnitt im Wesentlichen senkrecht zur Messrohrachse verlaufen. Ein an die Mantelfläche des Messrohres angebrachtes Elektrodenpaar greift eine senkrecht zur Flussrichtung und zum Magnetfeld anliegende elektrische Spannung ab, die entsteht, wenn ein leitfähiges Medium bei angelegtem Magnetfeld in Flussrichtung fließt. Da die abgegriffene Spannung laut Faraday'schem Induktionsgesetz von der Geschwindigkeit des fließenden Mediums abhängt, kann aus der Spannung die Durchflussgeschwindigkeit u und, mit Hinzunahme eines bekannten Rohrquerschnitts, der Volumendurchfluss V ermittelt werden.

Magnetisch-induktive Durchflussmessgeräte sind empfindlich gegenüber dem Strömungsprofil des Mediums. Abhängig vom Rohrsystem und Messgerät können Messfehler von mehreren Prozent auftreten. Üblicherweise wird daher ein Geradrohr, dessen Länge mindestens das Fünf- bis Zehnfache der Nennweite des Messrohres entspricht, an die einlaufseitige Stirnfläche eingebaut. Es sind allerdings Anwendungen bekannt, in welchen dieser Mindestabstand, die sogenannte Einlaufstrecke, nicht eingehalten werden kann. Das ist zum Beispiel dann der Fall, wenn sich ein Rohrsystem auf engstem Raum befindet. Eine Lösung liefert die in DE 10 2014113408 A1 offenbarte Erfindung, bei der eine Verengung des Rohrdurchmessers zur Konditionierung des Flusses führt, wodurch der Einfluss des Strömungsprofils minimiert wird, so dass eine 0-DN Einlaufstrecke verwendet werden kann. Dieser Ausgestaltung nachteilig ist aber, dass zwar eine geringere Empfindlichkeit gegenüber rotationsunsymmetrischer Strömungsprofile realisiert werden kann, dafür aber ein Druckverlust in Kauf genommen werden muss. Außerdem beschränkt sich diese Ausgestaltung auf Rohrsysteme mit DN<350.

Die Empfindlichkeit der Durchflussmessung gegenüber einem rotationsunsymmetrischen Strömungs-profil hängt von der Geometrie des Messrohres und der Elektroden ab. Daher müssen die Einflüsse der Rohr- und Elektrodengeometrie für die korrekte Beschreibung der geschwindigkeitsabhängigen Induktionsspannung berücksichtigt werden. Die beiden genannten Einflüsse werden mathematisch durch eine Gewichtsfunktion *GF* beschrieben.

Der Einfluss der Geometrie auf den Durchfluss lässt sich am besten an folgendem Zusammenhang verdeutlichen:

$$U(x) = \int\limits_{V} v(x')\, GF(x',x)\, dV$$

wobei für die Bestimmung der Spannung *U(x)*, die Strömungsgeschwindigkeit v(x') und die Gewichtsfunktion *GF(x',x)* über das Volumen des Messrohres integriert werden. Dabei wird die Gewichtsfunktion *GF* anhand *GF(x',x) = B × VG(x',x),* mit dem Magnetfeld *B(x')* und einer Greenschen Funktion G, die von den elektrischen Randbedingungen gegeben wird, beschrieben. Das Ziel eines Optimierungsverfahrens ist es nun die Geometrie des Aufbaus dahingehend zu optimieren, dass im gesamten Strömungsprofil $\nabla \times GF = 0$ gilt. Dies ist jedoch für ein Rohr mit einem einzelnen punktförmigen Elektrodenpaar nicht möglich. Einen möglichen Lösungsansatz liefert die Anpassung der Elektrodenform. Dies ist jedoch nicht praktisch und verursacht neue Schwierigkeiten. Ein weiterer Lösungsansatz besteht darin, mehrere Elektrodenpaaren zu verwenden.

So ist beispielsweise aus der CN 101294832 A ein magnetisch-induktives Durchflussmessgerät bekannt, das zwei Elektrodenpaare aufweist, die achsensymmetrisch in einem Rohrquerschnitt angeordnet sind, um somit den Einfluss des Strömungsprofils auf die Bestimmung des Volumendurchflusses zu minimieren. Die beiden durch die jeweiligen Elektrodenpaare definierten Elektrodenachsen spannen dabei in dem Querschnitt des Messrohres einen Winkel von ca. 40° auf. Eine weitere Ausführung wird in DE 10 2015113390 A1 gezeigt, in der ein zweites und drittes Elektrodenpaar auf definierten Elektrodenachsen angeordnet sind, die um einen Winkelmaß von kleiner gleich ±45° gegenüber einer zum Magnetfeld senkrecht orientierten ersten Elektrodenachse arrangiert sind.

Die EP 0878694 A1 und die US 6,094,992 A1 offenbaren ebenfalls jeweils ein magnetisch-induktives Durchflussmessgerät, das, ausgehend vom Stand der Technik, durch die Verwendung von zwei zusätzlichen Elektrodenpaaren, deren Elektrodenachsen jeweils einen Winkel von ca. 45° zu der Elektrodenachse des herkömmlichen Elektrodenpaares zur Messrohrachse aufspannen, eine Verbesserung der Messgenauigkeit im Bereich von Messfehlern unter 1% realisiert. Dies wird insbesondere dadurch erreicht, dass die an den Elektroden anliegenden Potentialdifferenzen einzeln erfasst und gewichtet werden.

Diesen Ausgestaltungen nachteilig ist aber, dass zwar für kleine Durchmesser die Messgenauigkeit optimiert wird, diese aber bei handelsüblichen Messrohren mit großer Nennweite nicht die angestrebte Verringerung der Messfehler erreichen. Außerdem ist nachteilig, dass für jedes Elektrodenpaar ein Gewichtungsfaktor berücksichtigt werden muss, wobei nicht von vornherein klar ist, wie dieser in Abhängigkeit des Rohrsystems bzw. des rotationsunsymmetrischen Strömungsprofils gewählt werden muss.

Ausgehend von dem dargelegten Stand der Technik liegt der vorliegenden Erfindung die Aufgabe zugrunde, ein magnetisch-induktives Durchflussmessgerät bereitzustellen, welches die Einflüsse eines rotationsunsymmetrischen Strömungsprofils bei der Bestimmung der Durchflussgeschwindigkeit und des Volumendurchflusses minimiert.

Die Aufgabe wird erfindungsgemäß durch das Verfahren gemäß dem unabhängigen Anspruch 1 gelöst.

Ein entsprechendes magnetisch-induktives Durchflussmessgerät zur Messung der Durchflussgeschwindigkeit $u$ oder des Volumendurchflusses $\dot{V}$ eines Mediums umfasst ein Messrohr, zum Führen des Mediums in eine durch eine Messrohrachse definierte Längsrichtung, wobei das Messrohr eine einlaufseitige Stirnfläche und eine auslaufseitige Stirnfläche, welche das Messrohr in Längsrichtung abgrenzen, aufweist, mindestens eine in Richtung eines Querschnitts des Messrohres positionierte, magnetfelderzeugende Vorrichtung zum Erzeugen eines im Wesentlichen senkrecht zur Längsrichtung stehenden Magnetfeldes im Medium, wobei die magnetfelderzeugende Vorrichtung durch ein an das Messrohr anliegendes oder ein einen vorgegebenen Mindestabstand aufweisendes, das Magnetfeld in das Medium einkoppelndes Segment, gekennzeichnet ist, wobei das Segment in dem Querschnitt des Messrohres das Messrohr in einem maximalen Kreisbogenwinkel $\beta$ umgreift, ein Elektrodensystem mit mindestens zwei Elektrodenpaaren, die dazu eingerichtet sind, eine senkrecht zum Magnetfeld und zur Längsrichtung induzierte Spannung im Medium zu erfassen, wobei eine vertikale Messrohr-Längsebene das Messrohr in eine erste Seite und in eine zweite Seite einteilt, wobei sich jeweils eine erste Elektrode des Elektrodenpaares auf der ersten Seite des Messrohres befindet, wobei sich jeweils eine zweite Elektrode des Elektrodenpaares auf der zweiten Seite befindet, wobei ein Winkel $\alpha$ in dem Querschnitt des Messrohres einen minimalen Kreissektor aufschlägt, in dem sich die auf jeweils einer Seite des Messrohres befindlichen Elektroden verteilen, dadurch gekennzeichnet, dass für den Winkel $\alpha$ gilt, dass $30° \leq \alpha \leq 60°$ ist und dass für den Winkel $\beta$ gilt, dass $70° \leq \beta \leq 80°$ ist.

Die Abstimmung der Winkel $\alpha$ und $\beta$ führt dazu, dass ein Messfehler der Durchflussgeschwindigkeit in einer Testmessung mit einer einzelnen Störung minimal wird, wobei die Störung durch eine Blende oder einen 90°Rohrbogen generiert wird. Erfindungsgemäß erfolgt ein Bestimmen eines Winkelpaares aus den Winkeln $\alpha$ und $\beta$, dessen maximaler Messfehler für alle durchgeführten Testmessungen minimal ist.

Vorteilhafte Ausgestaltung der Erfindung sind Gegenstand der Unteransprüche.

Gemäß einer Weiterbildung ist eine Unempfindlichkeit gegenüber einem rotationsunsymmetrischen Strömungsprofil bei einer Reynoldszahl des Mediums im Messrohr größer gleich 10.000, insbesondere größer gleich 50.000 und bevorzugt größer gleich 100.000 gegeben.

Gemäß einer weiteren Ausgestaltung weist das Durchflussmessgerät drei Elektrodenpaare auf.

Die Elektrodenpaare müssen dabei nicht notwendigerweise diametral angeordnet sein. Die mindestens zwei Elektrodenpaare sind mit dem Messmedium galvanisch oder kapazitiv gekoppelt. Gemäß einer weiteren Ausgestaltung sind mindestens zwei Elektroden, insbesondere alle auf jeweils einer Seite des Messrohres bezüglich der vertikalen Messrohr-Längsebene befindlichen Elektroden kurzgeschlossen.

Der technische Erfolg dieser Ausgestaltung der Erfindung besteht darin, dass gefunden wurde, dass durch das Anpassen der Winkel $\alpha$ und $\beta$ auf eine Abtastung der einzelnen Potentialdifferenzen mit Hinzunahme von empirisch bestimmte Gewichtungsfaktoren verzichtet werden kann und die anliegende Spannung über alle Elektroden im Falle einer Störung weniger als 0,5% von einem anhand eines voll ausgebildeten Strömungsprofils ermittelten Messwertes abweicht. Eine Gewichtung der einzelnen Spannungswerte ist somit nicht notwendig, wodurch die Auswerteeinheit zur Bestimmung der anliegenden Spannung und der daraus resultierenden Strömungsgeschwindigkeit deutlich vereinfacht werden kann. Es reicht nunmehr den gemessenen Spannungswert mittels einer Kalibration in eine Strömungsgeschwindigkeit oder einen Volumendurchfluss umzuwandeln.

Die Elektroden werden insbesondere durch Kabel miteinander kurzgeschlossen und bevorzugt durch ein leitfähiges Blechteil. Das bietet eine einfache und stabile Montage und liefert zusätzlich eine kostengünstige Alternative zu bekannten Lösungen.

Die Elektroden sind mit einer Regel- und Auswerteeinheit verbunden, die anhand der in den Elektroden induzierten Spannung Informationen über die Durchflussgeschwindigkeit und den Volumendurchfluss im Messrohr liefert.

Das Abstimmen der Winkel $\alpha$ und $\beta$ kann mit einem Simulationsprogramm durchgeführt werden.

Gemäß einer weiteren Ausgestaltung umfasst die magnetfelderzeugende Vorrichtung zum Erzeugen eines senkrecht zur Längsrichtung des Messrohres stehenden Magnetfeldes im Medium mindestens eine Sattelspule oder mindestens einen Polschuh mit aufgesetzter Spule.

Üblicherweise umfasst die magnetfelderzeugende Vorrichtung zwei diametral angeordnete Spulensysteme. In einem handelsüblichen magnetisch-induktiven Durchflussmessgerät werden gewöhnlich Sattelspulen oder Polschuhe mit aufgesetzten Spulen verbaut. Sie umgreifen das Messrohr und spannen einen Bereich auf, in dem das Magnetfeld im Medium annähernd homogen bzw. senkrecht zur Abszissenachse verläuft.

Gemäß einer weiteren Ausgestaltung sind die Elektroden achsensymmetrisch zur vertikalen Messrohr-Längsebene angeordnet.

Gemäß einer weiteren Ausgestaltung schlagen jeweils zwei auf einer Seite des Messrohres befindlichen, benachbarten Elektroden einen Winkel $\delta = \alpha/(N - 1)$ in dem Querschnitt auf, wobei die natürliche Zahl N der Anzahl der Elektrodenpaare entspricht.

Gemäß einer Ausgestaltung werden die Elektroden mit einem Stanzbiegeteil kurzgeschlossen.

Die Erfindung wird im Folgenden anhand von Ausführungsbeispielen unter Bezugnahme auf die beiliegenden Figuren der Zeichnung näher erläutert. Es zeigt:

Fig.1a: eine schematische Darstellung einer Ausführungsform des erfindungsgemäß auszulegenden magnetisch-induktiven Durchflussmessgerätes,

Fig.1b: eine schematische Darstellung eines Längsschnittes des Messrohres (1),

Fig.2a: zwei schematische Darstellungen einer Blende (B) mit jeweils einer ersten Blendenorientierung (B1) und einer zweiten Blendenorientierung (B2),

Fig.2b: zwei schematische Darstellungen eines 90°Rohrbogens (90°R) mit jeweils einer ersten Rohrbogenorientierung (R1) und einer zweiten Rohrbogenorientierung (R2),

Fig.3: eine schematische Darstellung einer Ausgestaltung der Messkonfiguration, in der alle auf einer Seite befindlichen Elektroden kurzgeschlossen sind,

Fig.4: eine Übersicht des Messfehlers in Abhängigkeit von den Winkeln $\alpha$ und $\beta$ für ein 80-DN Messrohr und

Fig.5: die maximale Abweichung der gemessenen Durchflussgeschwindigkeit aufgrund eines gestörten Strömungsprofils in Abhängigkeit von der Nennweite des Messrohres für drei unterschiedliche Elektroden- und Vorrichtungskonfigurationen unter Verwendung von drei Elektrodenpaaren.

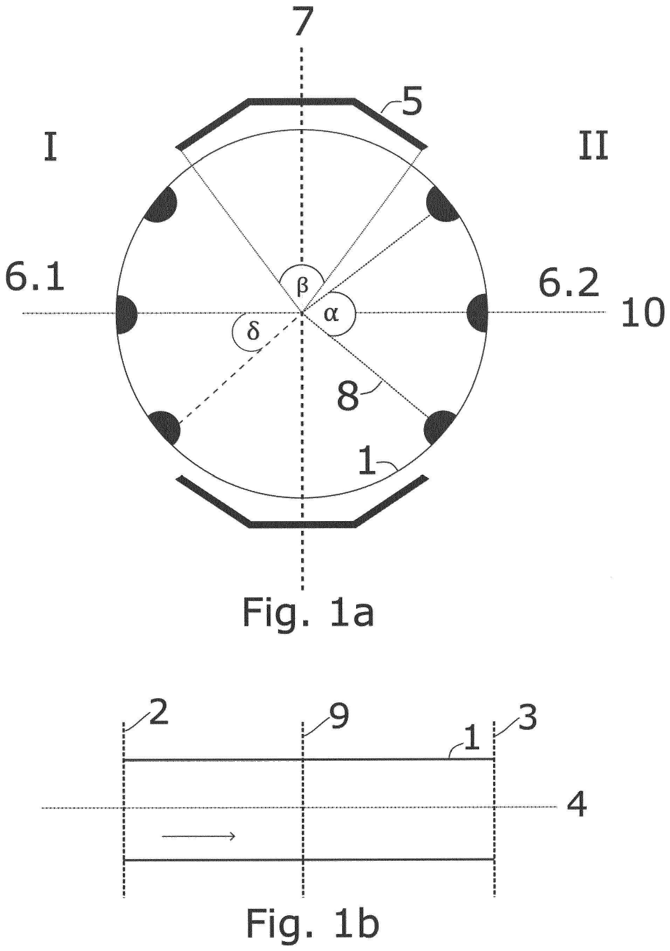

Der Aufbau und das Messprinzip eines magnetisch-induktiven Durchflussmessgerätes ist grundsätzlich bekannt. Fig.1a zeigt einen schematischen Querschnitt (9) eines bekannten magnetisch-induktiven Durchflussmessgerätes. Durch ein Messrohr (1) wird ein Medium geleitet, das eine elektrische Leitfähigkeit aufweist. Eine magnetfelderzeugende Vorrichtung (5) ist so angebracht, dass sich die Magnetfeldlinien senkrecht zu einer durch die Messrohrachse definierten Längsrichtung (4) orientieren. Als magnetfelderzeugende Vorrichtung (5) eignet sich vorzugsweise eine Sattelspule oder ein Polschuh mit aufgesetzter Spule. Bei angelegtem Magnetfeld entsteht im Messrohr (1) eine Potentialverteilung, die mit zwei an der Innenwand des Messrohres (1) angebrachten Elektroden abgegriffen werden kann. In der Regel sind diese diametral angeordnet und bilden eine Elektrodenachse, die senkrecht zu den Magnetfeldlinien und der Längsrichtung (4) verläuft. Anhand der gemessenen Spannung kann, unter Berücksichtigung der magnetischen Flussdichte, die Durchflussgeschwindigkeit des Mediums u und, unter Berücksichtigung der Rohrquerschnittsfläche, der Volumendurchfluss V bestimmt werden. Um das Ableiten der an dem Elektrodensystem (6) anliegenden Spannung über die Rohrleitung zu verhindern, wird die Innenwand mit einem isolierenden Material verkleidet. Das durch beispielsweise einen Elektromagneten aufgebaute Magnetfeld wird durch einen getakteten Gleichstrom wechselnder Polarität erzeugt. Dies gewährleistet einen stabilen Nullpunkt und macht die Messung unempfindlich gegenüber Einflüssen durch Mehrphasenstoffe, Inhomogenitäten in der Flüssigkeit oder geringer Leitfähigkeit.

Erfindungsgemäß werden mindestens zwei Elektrodenpaare für die Bestimmung des Volumendurchflusses $\dot{V}$ verwendet. In einer schematischen Darstellung, Fig.1a, wird beispielhaft ein magnetisch-induktives Durchflussmessgerät mit drei Elektrodenpaaren abgebildet.

Neben dem Elektrodensystem (6), das zum Abgreifen einer Potentialdifferenz dient, werden oftmals zusätzliche Elektroden in Form von Messstoffüberwachungs- oder Erdungselektroden in das Messrohr (1) eingebaut, die dazu dienen, ein elektrisches Referenzpotential zu messen oder teilgefüllte Messrohre (1) zu erkennen oder die Temperatur des Mediums mittels eingebautem Temperaturfühler zu erfassen. Diese werden in der schematischen Darstellung der Fig.1 nicht berücksichtigt.

Dabei liegt jeweils eine erste Elektrode (6.1) des Elektrodenpaares auf der ersten Seite (I) des Messrohres (1) und eine zweite Elektrode (6.2) des Elektrodenpaares auf der zweiten Seite (II). Die außenliegenden Elektroden einer Seite spannen einen Winkel $\alpha$ im Querschnitt (9) auf. Die weiteren Elektroden verteilen sich innerhalb des aufgeschlagenen Kreissegments, bevorzugt an der Innenwand des Messrohres (1).

Bei dem in Fig.1a dargestellten Durchflussmessgerät befindet sich das Elektrodensystem (6) in direktem Kontakt mit dem Medium; die Kopplung kann jedoch, wie oben erwähnt, auch kapazitiv erfolgen.

Ein magnetisch-induktives Durchflussmessgerät umfasst eine einlaufseitige Stirnfläche (2) und eine auslaufseitige Stirnfläche (3) (siehe Fig.1b). In Fig.1b deutet ein Pfeil die Flussrichtung des Mediums an. Ein an die einlaufseitige Stirnfläche (2) montierter 90°Rohrbogen (90°R) oder eine Blende (B) wirken sich auf das Strömungsprofil des Mediums aus, so dass im Messrohr (1) ein rotationsunsymmetrisches Strömungsprofil herrscht.

Die magnetfelderzeugende Vorrichtung (5) ist üblicherweise so konzipiert, dass sich die Magnetfeldlinien möglichst homogen über den Querschnitt (9) des Messrohres verteilen. Dadurch können besonders für voll ausgebildete Strömungsprofile Messfehler von unter 0,2% erreicht werden. Bei einem rotationsunsymmetrischen Strömungsprofil kann sich ein homogenes Magnetfeld nachteilig auf die Messgenauigkeit auswirken. Dieses Problem kann erfinderisch durch das Anpassen der magnetfelderzeugenden Vorrichtung (5) gelöst werden, insbesondere durch das Anpassen des Kreisbogenwinkels $\beta$.

Durch die Variation des Winkels $\beta$, der beschreibt in wieweit ein an das Messrohr (1) angebrachtes Segment der magnetfelderzeugenden Vorrichtung (5) das Messrohr (1) umgreift, erhält man einen weiteren Freiheitsgrad für die Reduzierung des Messfehlers. Ein das Magnetfeld in das Medium einkoppelndes Segment kann einen Polschuh umfassen, der zwei an eine ebene Fläche angrenzende Schenkel oder auch zwei an seiner ebenen Fläche angebrachte Kreisbögen aufweist. Alternativ kann ein Polschuh auch die Form eines Kreisbogens annehmen. Im Allgemeinen kann ein das Magnetfeld in das Medium einkoppelndes Segment eine beliebige Kontur, bestehend aus mindestens einem weiteren Teilsegment, annehmen. Für die Ermittlung des maximalen Kreisbogenwinkels $\beta$ werden die Teilsegmente berücksichtigt, die im Wesentlichen dafür verantwortlich sind, das Magnetfeld in das Medium einzukoppeln.

Die Messfehler der Durchflussgeschwindigkeit u bzw. des Volumendurchflusses $\dot{V}$ sind $\Delta_u = \left| \frac{u_{va} - u_S}{u_{va}} \right|$ bzw. $\Delta_{\dot{V}} = \left| \frac{\dot{V}_{va} - \dot{V}_S}{\dot{V}_{va}} \right|$, wobei die Durchflussgeschwindigkeit $u_{va}$ und der Volumendurchfluss $\dot{V}_{va}$ im Falle einer Strömung mit voll ausgebildeten Strömungsprofil bestimmt werden, und die Durchflussgeschwindigkeit $u_S$ und der Volumendurchfluss $\dot{V}_S$ im Falle eines rotationsunsymmetrischen Strömungsprofils bestimmt werden. Dabei ist der reale Volumendurchfluss $\dot{V}_{real}$ in beiden Fällen identisch und im Falle des voll ausgebildeten Strömungsprofils optimalerweise gleich dem gemessenen Volumendurchfluss $\dot{V}_{va}$.

In den Simulationen bildet ein magnetisch-induktives Durchflussmessgerät mit drei Elektrodenpaaren die Grundlage für Berechnung der optimalen Parameter. Die Fläche der Elektroden ist größer als punktförmig, jedoch endlich groß. Die Optimierung der Winkel $\alpha$ und $\beta$ läuft in folgenden Schritten ab:
Im ersten Schritt werden erfindungsgemäß die Winkel $\alpha$ und $\beta$ so angepasst, dass der Messfehler der Durchflussgeschwindigkeit in Testmessungen mit einer einzelnen Störung minimal wird. Dabei wird die Störung durch eine Blende (B) oder einen 90°Rohrbogen (90°R) generiert.

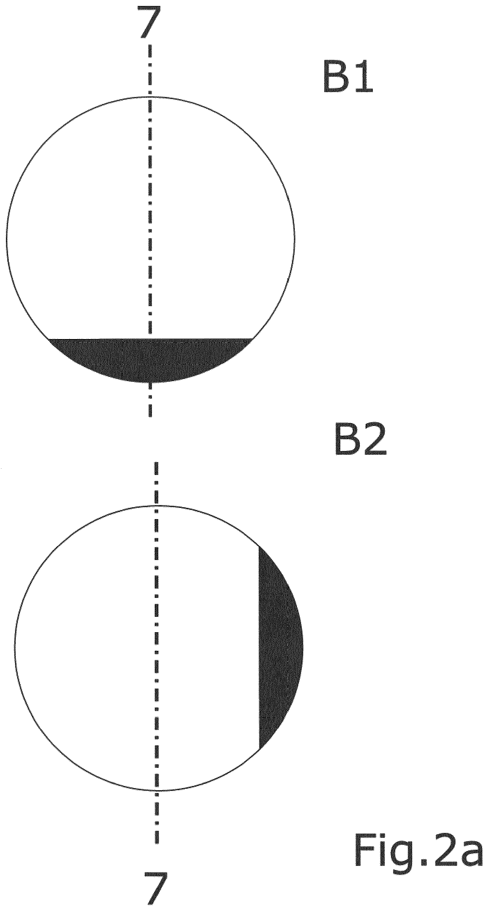

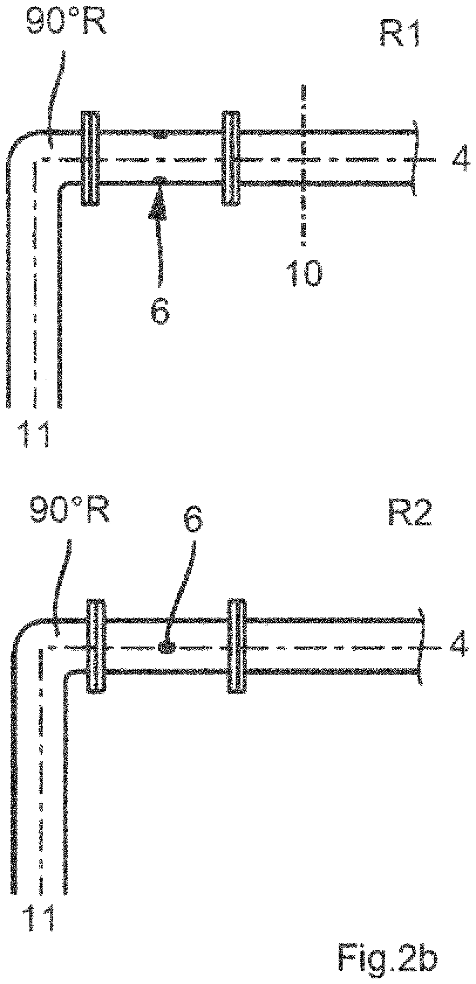

Die Blende (B) deckt dabei 10% des Rohrquerschnitts (9) ab und weist eine Kreissehne auf, welche die Blende zum Rohr hin begrenzt. Sie nimmt eine erste Blendenorientierung (B1) oder eine zweite Blendenorientierung (B2) an, die insbesondere um 90° zueinander verdreht sind. Dabei ist die Kreissehne bei der ersten Blendenorientierung (B1) senkrecht zum Magnetfeld und bei der zweiten Blendenorientierung (B2) parallel zum Magnetfeld orientiert. Die erste Blendenorientierung (B1) und die zweite Blendenorientierung (B2) einer Blende (B) ist schematisch in Fig.2a dargestellt. Das schwarz gefüllte Kreissegment stellt dabei die Fläche dar, die einen Teil der Querschnittsfläche des Messrohres blockiert. In der Testmessung ist die Blende (B) mit einem Abstand von 0-DN zur einlaufseitigen Stirnfläche (2) angebracht. Alternativ wird ein 90°Rohrbogen (90°R) eingangs zur einlaufseitigen Stirnfläche (2) in einem Abstand von 0-DN angebracht, wobei der 90°Rohrbogen (90°R) eine erste Rohrbogenorientierung (R1) oder eine zweite Rohrbogenorientierung (R2) annimmt, die insbesondere um 90° zueinander verdreht sind. Die erste Rohrbogenorientierung (R1) und die zweite Rohrbogenorientierung (R2) eines 90°Rohrbogens (90°R) ist schematisch in Fig.2b dargestellt. Die Anpassung der Winkel $\alpha$ und $\beta$ wird vorzugsweise für die beiden Störungen mit beiden Orientierungen durchgeführt.

Im zweiten Schritt wird erfindungegmäß das Winkelpaar bestimmt, dessen maximaler Messfehler für alle durchgeführten Testmessungen minimal ist.

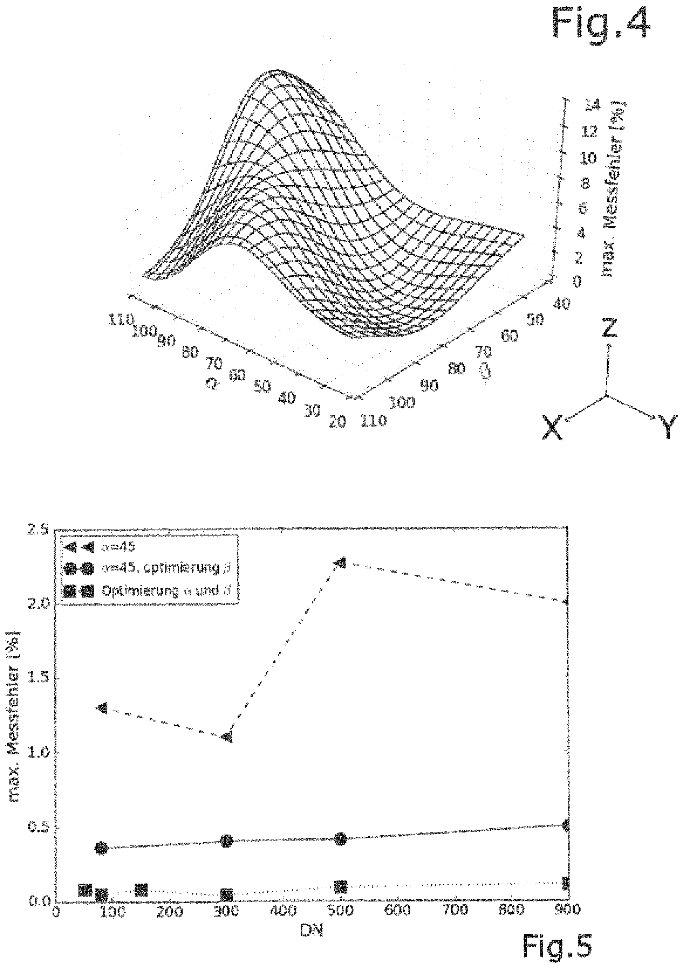

In Fig.4 ist beispielhaft der simulierte Messfehler (Z-Achse) für ein 500-DN Messrohr (1) in Abhängigkeit vom Winkel $\alpha$ (Y-Achse) und vom Winkel $\beta$ (X-Achse) aufgetragen. Anhand des Verlaufes wird das Minimum des Messfehlers für eine spezifische Störung, hier ein Rohrbogen (90°R) optimiert bzgl. einer ersten und zweiten Rohrbogenorientierung (R1, R2), ermittelt. Dabei zeichnet sich die erste Rohrbogenorientierung (R1) durch eine senkrecht zum Magnetfeld und zur Längsrichtung (4) verlaufende Rohrachse (11) und die zweite Rohrbogenorientierung (R2) durch eine parallel zum Magnetfeld und senkrecht zur Längsrichtung (4) verlaufende Rohrachse (11) aus (siehe Fig.2b). Dieses Vorgehen wird für alle oben genannten Störungen wiederholt, wobei im letzten Schritt das Winkelpaar ermittelt wird, das den kleinsten Messfehler bezüglich aller Testmessungen aufweist. Die Werte für die Winkel $\alpha$ und $\beta$ werden solange angepasst, bis der resultierende Messfehler für alle Testmessungen kleiner 0,5%, bevorzugt kleiner 0,2% ist.

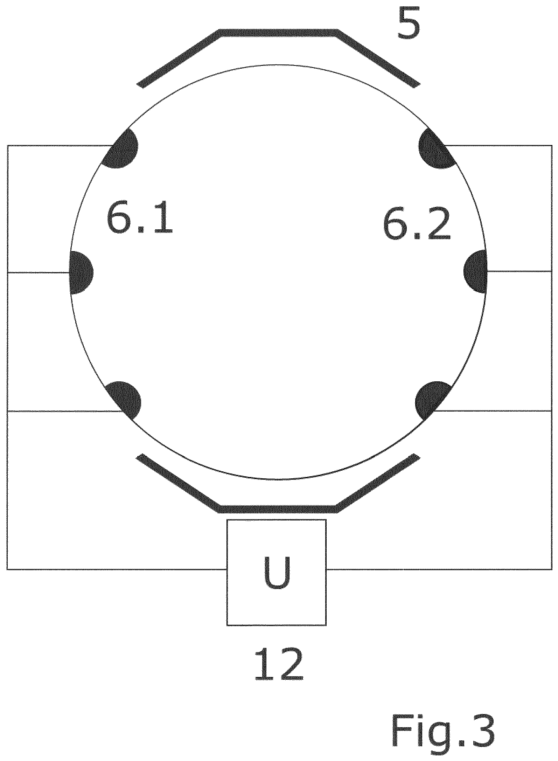

Fig.3 zeigt eine bevorzugte Messkonfiguration, in der die einzelnen auf einer Seite befindlichen Elektroden Seite kurzgeschlossen werden. Die gemessene Spannung entspricht einer mittleren Spannung über alle Elektroden. Beispielsweise werden die Elektroden einseitig durch einzelne Kabel oder mit einem formangepassten Blechteil kurzgeschlossen und mit einer Regel- und Auswerteeinheit (12) verbunden.

Fig.5 zeigt den maximalen Messfehler der gemessenen Durchflussgeschwindigkeit aufgrund eines gestörten Strömungsprofils in Abhängigkeit von der Nennweite des Messrohres (1) für drei unterschiedliche Elektroden- und Vorrichtungskonfigurationen unter Verwendung von drei Elektrodenpaaren. Der maximale Messfehler ergibt sich dabei aus dem höchsten Messfehler für das Winkelpaar ($\alpha$ - $\beta$) in Bezug auf alle durchgeführten Testmessungen. Die Dreiecke zeigen den maximalen Messfehler für ein magnetisch-induktives Durchflussmessgerät mit einem Winkel $\beta$, der beispielsweise bei einem magnetisch-induktiven Durchflussmessgerät der Reihe Promag W der Firma Endress+Hauser verwendet wird. Für den Winkel $\alpha$ wird gemäß EP 0 878 694 A1 eine Winkelweite von 45° angenommen. Unter Optimierung der Gewichtung der ermittelten Spannungswerte erhält man einen maximalen Messfehler von 1% für ein Messrohr (1) mit 50-DN und einen maximalen Messfehler von 2,25% für ein Messrohr (1) mit 900-DN. Die Kreise zeigen Ergebnisse von Simulationen bei denen auch der Winkel $\beta$ für die Optimierung variiert wird und der Winkel $\alpha$ konstant bei 45° gehalten wird. Durch die Verwendung von $\beta$ als zusätzlich Optimierungsparameter kann der Messfehler bei einem unsymmetrischen Strömungsprofil deutlich reduziert werden. Die Quadrate zeigen Ergebnisse von Simulationen bei denen zusätzlich zum variablen Winkel $\beta$ auch der Winkel $\alpha$, der den Elektrodenbereich aufschlägt, für die Optimierung als variable angenommen. In diesem Fall wird auf eine Gewichtung der einzelnen an den Elektrodenpaaren anliegenden Spannung verzichtet, was kurzgeschlossene Elektroden entspricht. Dadurch kann die aufgrund eines rotationsunsymmetrischen Strömungsprofils entstandene Messfehler noch einmal halbiert werden. Für die Ermittlung der optimalen Winkel $\alpha$ und $\beta$ wurden Störungen umfassend eine Blende (B) mit einer ersten Blendenorientierung (B1), eine Blende (B) mit einer zweiten Blendenorientierung (B2), einen 90°Rohrbogen (90°R) mit einer Rohrbogenorientierung (R1) und einen 90°Rohrbogen (90°R) mit einer Rohrbogenorientierung (R2) verwendet.

Basierend auf dem oben beschriebenen Optimierungsverfahren weist ein magnetisch-induktives Durchflussmessgerät mit drei Elektrodenpaaren, einem 150-DN Messrohr (1) und einem Medium mit einer Durchflussgeschwindigkeit von 1 m/s einen Messfehler von 0,15% auf bei einer eingesetzten Blende (B) mit Blendenorientierung (B1) und einen Messfehler von 0,01% bei einer eingesetzten Blende (B) mit Blendenorientierung (B2).

Basierend auf dem oben beschriebenen Optimierungsverfahren weist ein magnetisch-induktives Durchflussmessgerät mit drei Elektrodenpaaren, einem 150-DN Messrohr (1) und einem Medium mit einer Durchflussgeschwindigkeit von 1 m/s einen Messfehler von 0,05% auf bei einem eingesetzten 90°Rohrbogen (90°R) mit Rohrbogenorientierung (R1) und einen Messfehler von 0,02% bei einem eingesetzten 90°Rohrbogen (90°R) mit Rohrbogenorientierung (R2).

Basierend auf dem oben beschriebenen Optimierungsverfahren weist ein magnetisch-induktives Durchflussmessgerät mit drei Elektrodenpaaren, einem 300-DN Messrohr (1) und einem Medium mit einer Durchflussgeschwindigkeit von 1 m/s einen Messfehler von 0,04% auf bei einer eingesetzten Blende (B) mit Blendenorientierung (B1) und einen Messfehler von 0,21% bei einer eingesetzten Blende (B) mit Blendenorientierung (B2).

Basierend auf dem oben beschriebenen Optimierungsverfahren weist ein magnetisch-induktives Durchflussmessgerät mit drei Elektrodenpaaren, einem 300-DN Messrohr (1) und einem Medium mit einer Durchflussgeschwindigkeit von 1 m/s einen Messfehler von 0,04% auf bei einem eingesetzten 90°Rohrbogen (90°R) mit Rohrbogenorientierung (R1) und einen Messfehler von 0,15% bei einem eingesetzten 90°Rohrbogen (90°R) mit Rohrbogenorientierung (R2).

Basierend auf dem oben beschriebenen Optimierungsverfahren weist ein magnetisch-induktives Durchflussmessgerät mit drei Elektrodenpaaren, einem 500-DN Messrohr (1) und einem Medium mit einer Durchflussgeschwindigkeit von 1 m/s einen Messfehler von 0,07% auf bei einer eingesetzten Blende (B) mit Blendenorientierung (B1) und einen Messfehler von 0,04% bei einer eingesetzten Blende (B) mit Blendenorientierung (B2).

Basierend auf dem oben beschriebenen Optimierungsverfahren weist ein magnetisch-induktives Durchflussmessgerät mit drei Elektrodenpaaren, einem 500-DN Messrohr (1) und einem Medium mit einer Durchflussgeschwindigkeit von 1 m/s einen Messfehler von 0,18% auf bei einem eingesetzten 90°Rohrbogen (90°R) mit Rohrbogenorientierung (R1) und einen Messfehler von 0,09% bei einem eingesetzten 90°Rohrbogen (90°R) mit Rohrbogenorientierung (R2).

**Bezugszeichenliste**

| | |
|---|---|
| 1 | Messrohr |
| 2 | einlaufseitige Stirnfläche |
| 3 | auslaufseitige Stirnfläche |
| 4 | Längsrichtung |
| 5 | magnetfelderzeugende Vorrichtung |
| 6 | Elektrodensystem |
| 6.1 | Erste Elektrode eines Elektrodenpaares |
| 6.2 | Zweite Elektrode eines Elektrodenpaares |
| 7 | vertikale Messrohr-Längsebene |
| 8 | Radius |
| 9 | Querschnitt |
| 10 | Abszissenachse |
| 11 | Rohrachse |
| 12 | Regel- und Auswerteeinheit |
| B | Blende |
| B1 | Erste Blendenorientierung |
| B2 | Zweite Blendenorientierung |
| 90°R | 90°Rohrbogen/Krümmer |

R1 Erste Rohrbogenorientierung
R2 Zweite Rohrbogenorientierung
I Erste Seite
II Zweite Seite

## Patentansprüche

**1.** Verfahren zum Auslegen eines magnetisch-induktiven Durchflussmessgeräts zur Messung der Durchflussgeschwindigkeit u oder des Volumendurchflusses $\dot{V}$ eines Mediums, wobei das magnetisch-induktive Durchflussmessgerät umfasst:

- ein Messrohr (1), zum Führen des Mediums in eine durch eine Messrohrachse definierte Längsrichtung (4), wobei das Messrohr eine einlaufseitige Stirnfläche (2) und eine auslaufseitige Stirnfläche (3), welche das Messrohr (1) in Längsrichtung (4) abgrenzen, aufweist;
- mindestens eine in Richtung eines Querschnitts (9) des Messrohres (1) positionierte, magnetfelderzeugende Vorrichtung (5) zum Erzeugen eines im Wesentlichen senkrecht zur Längsrichtung (4) stehenden Magnetfeldes im Medium;

  ○ wobei die magnetfelderzeugende Vorrichtung (5) durch ein an das Messrohr anliegendes oder ein einen vorgegebenen Mindestabstand aufweisendes, das Magnetfeld in das Medium einkoppelndes Segment, gekennzeichnet ist,
  ○ wobei das Segment in dem Querschnitt (9) des Messrohres (1) das Messrohr (1) in einem maximalen Kreisbogenwinkel $\beta$ umgreift,

- ein Elektrodensystem (6) mit mindestens zwei Elektrodenpaaren, die dazu eingerichtet sind, eine senkrecht zum Magnetfeld und zur Längsrichtung (4) induzierte Spannung im Medium zu erfassen;

  ○ wobei eine vertikale Messrohr-Längsebene (7) das Messrohr (1) in eine erste Seite (I) und in eine zweite Seite (II) einteilt,
  ○ wobei sich jeweils eine erste Elektrode (6.1) des Elektrodenpaares auf der ersten Seite (I) des Messrohres befindet,
  ○ wobei sich jeweils eine zweite Elektrode (6.2) des Elektrodenpaares auf der zweiten Seite (II) befindet,
  ○ wobei ein Winkel $\alpha$ in dem Querschnitt (9) des Messrohres einen minimalen Kreissektor aufschlägt, in dem sich die auf jeweils einer Seite des Messrohres (1) befindlichen Elektroden (6.1, 6.2) verteilen,
  ○ wobei für den Winkel $\alpha$ gilt, dass $30° \leq \alpha \leq$

60° ist und für den Winkel $\beta$ gilt, dass $70° \leq \beta \leq 80°$ ist,

wobei das Verfahren die Verfahrensschritte umfasst:

- Anpassen der Winkel $\alpha$ und $\beta$ derart, dass ein Messfehler der Durchflussgeschwindigkeit in einer Testmessung mit einer einzelnen Störung minimal wird,

  ○ wobei die Störung durch eine Blende (B) oder einen 90°Rohrbogen (90°R) generiert wird; und

- Bestimmen eines Winkelpaares aus den Winkeln $\alpha$ und $\beta$, dessen maximaler Messfehler für alle durchgeführten Testmessungen minimal ist.

**2.** Verfahren nach Anspruch 1,
wobei eine Unempfindlichkeit gegenüber einem rotationsunsymmetrischen Strömungsprofil bei einer Reynoldszahl des Mediums im Messrohr (1) größer gleich 10.000, insbesondere größer gleich 50.000 und bevorzugt größer gleich 100.000 gegeben ist.

**3.** Verfahren nach Anspruch 1 oder 2 ,
wobei das Durchflussmessgerät drei Elektrodenpaare aufweist.

**4.** Verfahren nach einem der Ansprüche 1 bis 3,
wobei mindestens zwei Elektroden, insbesondere alle auf jeweils einer Seite des Messrohres bezüglich der vertikalen Messrohr-Längsebene (7) befindlichen Elektroden, insbesondere mit einem Stanzbiegeteil, kurzgeschlossen sind.

**5.** Verfahren nach einem der Ansprüche 1 bis 4,
wobei die magnetfelderzeugende Vorrichtung (5) zum Erzeugen eines senkrecht zur Längsrichtung (4) des Messrohres stehenden Magnetfeldes im Medium mindestens eine Sattelspule oder mindestens einen Polschuh mit aufgesetzter Spule umfasst.

**6.** Verfahren nach einem der Ansprüche 1 bis 5,
wobei die Elektroden achsensymmetrisch zur vertikalen Messrohr-Längsebene (7) angeordnet sind.

**7.** Verfahren nach einem der Ansprüche 1 bis 6,
wobei jeweils zwei auf einer Seite des Messrohres (1) befindlichen, benachbarten Elektroden einen Winkel $\delta = \alpha/(N - 1)$ in dem Querschnitt (9) des Messrohres aufschlagen, wobei eine natürliche Zahl $N$ der Anzahl der Elektrodenpaare entspricht.

**8.** Verfahren nach einem der Ansprüche 1 bis 7,
wobei eine Abstimmung der Winkel $\alpha$ und $\beta$ mit einem Simulationsverfahren durchgeführt wird.

## Claims

1. A method for designing a magneto-inductive flowmeter for measuring the flow velocity $u$ or the volume flow $V$ of a medium, wherein the magneto-inductive flowmeter comprises:

   - A measuring tube (1), for conducting the medium in a longitudinal direction (4) defined by a measuring tube axis, wherein the measuring tube has an inlet-side end face (2) and an outlet-side end face (3) which delimit the measuring tube (1) in the longitudinal direction (4);
   - at least one magnetic-field-generating device (5) positioned in the direction of a cross-section (9) of the measuring tube (1) for generating a magnetic field in the medium essentially perpendicular to the longitudinal direction (4);

      ◦ wherein the magnetic-field-generating device (5) is **characterized by** a segment which rests on the measuring tube or is spaced at a specified minimum distance from it and couples the magnetic field into the medium,
      ◦ wherein the segment in the cross-section (9) of the measuring tube (1) encompasses the measuring tube (1) at a maximum arc angle $\beta$,

   - an electrode system (6) with at least two pairs of electrodes which are configured to detect a voltage induced in the medium perpendicular to the magnetic field and to the longitudinal direction (4);

      ◦ wherein a vertical measuring tube longitudinal plane (7) divides the measuring tube (1) into a first side (I) and a second side (II),
      ◦ wherein a first electrode (6.1) of each pair of electrodes is located on the first side (I) of the measuring tube,
      ◦ wherein a second electrode (6.2) of each pair of electrodes is located on the second side (II),
      ◦ wherein an angle $\alpha$ in the cross-section (9) of the measuring tube creates a minimum circular sector, in which the electrodes 6.1, 6.2) located on each side of the measuring tube (1) are distributed,
      ◦ wherein the following applies to angle $\alpha$: $30° \leq \alpha \leq 60°$, and the following applies to angle 6: $70° \leq \beta \leq 80°$,

   wherein the method comprises the following process steps:

   - Adjusting angles $\alpha$ and $\beta$ in such a way that a measurement error of the flow velocity becomes minimal in a test measurement with a single fault,

      ◦ wherein the fault is generated by an orifice plate (B) or a 90° pipe elbow (90°R); and

   - working out a pair of angles from angles $\alpha$ and $\beta$, the maximum measurement error of which is minimal for all test measurements that are performed.

2. The method as claimed in claim 1, wherein an insensitivity toward a rotationally asymmetrical flow profile with a Reynolds number of the medium in the measuring tube (1) is greater than or equal to 10,000, in particular greater than or equal to 50,000, and preferably greater than or equal to 100,000.

3. The method as claimed in claim 1 or 2, wherein the flowmeter has three pairs of electrodes.

4. The method as claimed in one of claims 1 to 3, wherein at least two electrodes, in particular all electrodes located on each side of the measuring tube relative to the vertical measuring tube longitudinal plane (7), are shortcircuited, in particular with a stamped/bent part.

5. The method as claimed in one of claims 1 to 4, wherein the magnetic-field-generating device (5) for generating a magnetic field in the medium perpendicular to the longitudinal direction (4) of the measuring tube comprises at least one saddle-shaped coil or at least one pole shoe with surface-mounted coil.

6. The method as claimed in one of claims 1 to 5, wherein the electrodes are arranged such that they are axially symmetrical to the vertical measuring tube longitudinal plane (7).

7. The method as claimed in one of claims 1 to 6, wherein two adjacent electrodes located on each side of the measuring tube (1) create an angle $\delta = \alpha/(N - 1)$ in the cross-section (9) of the measuring tube, wherein a natural number N is equal to the number of pairs of electrodes.

8. The method as claimed in one of claims 1 to 7, wherein angles $\alpha$ and $\beta$ are coordinated by means of a simulation process.

## Revendications

1. Procédé pour la réalisation d'un débitmètre électromagnétique destiné à mesurer la vitesse d'écoulement *u* ou le débit volumique *V* d'un produit, le débitmètre électromagnétique comprenant :

- un tube de mesure (1) destiné à guider le produit dans une direction longitudinale (4) définie par un axe de tube de mesure, le tube de mesure présentant une surface frontale côté entrée (2) et une surface frontale côté sortie (3), lesquelles surfaces délimitent le tube de mesure (1) dans la direction longitudinale (4) ;
- au moins un dispositif générateur de champ magnétique (5) positionné dans la direction d'une section transversale (9) du tube de mesure (1), lequel dispositif est destiné à générer dans le produit un champ magnétique pour l'essentiel perpendiculaire à la direction longitudinale (4)

  ∘ le dispositif générateur de champ magnétique (5) étant **caractérisé par** un segment s'appliquant contre le tube de mesure ou présentant une distance minimale prédéfinie et couplant le champ magnétique dans le produit
  ∘ le segment entourant le tube de mesure (1) dans la section transversale (9) du tube de mesure (1) selon un angle d'arc de cercle maximal $\beta$

- un système d'électrodes (6) avec au moins deux paires d'électrodes, lesquelles sont conçues pour détecter une tension induite dans le produit perpendiculairement au champ magnétique et à la direction longitudinale (4) ;

  ∘ un plan longitudinal vertical (7) du tube de mesure divisant le tube de mesure (1) en un premier côté (I) et en un deuxième côté (II),
  ∘ une première électrode (6.1) de la paire d'électrodes se trouvant sur le premier côté (I) du tube de mesure,
  ∘ une deuxième électrode (6.2) de la paire d'électrodes se trouvant sur le deuxième côté (II) du tube de mesure,
  ∘ un angle $\alpha$ ouvrant dans la section transversale (9) du tube de mesure un secteur circulaire minimal dans lequel se répartissent les électrodes (6.1, 6.2) se trouvant respectivement sur un côté du tube de mesure (1),
  ∘ l'angle $\alpha$ étant tel que 30° $\leq \alpha \leq$ 60° et l'angle $\beta$ tel que 70° $\leq \beta \leq$ 80°,

le procédé comprenant les étapes suivantes :

- Adaptation des angles $\alpha$ et $\beta$ de telle sorte qu'une erreur de mesure de la vitesse d'écoulement dans une mesure de test avec une seule perturbation soit minimale,

  ∘ la perturbation étant générée par un diaphragme (B) ou un coude de tube à 90° (90°R) ; et

- Détermination d'une paire d'angles à partir des angles $\alpha$ et $\beta$ dont l'erreur de mesure maximale est minimale pour toutes les mesures de test effectuées.

2. Procédé selon la revendication 1, pour lequel une insensibilité à un profil d'écoulement asymétrique en rotation est donnée pour un nombre de Reynolds du produit dans le tube de mesure (1), lequel nombre est supérieur ou égal à 10 000, notamment supérieur ou égal à 50 000 et de préférence supérieur ou égal à 100 000.

3. Procédé selon la revendication 1 ou 2, pour lequel le débitmètre comprend trois paires d'électrodes.

4. Procédé selon l'une des revendications 1 à 3, pour lequel au moins deux électrodes, notamment toutes les électrodes se trouvant respectivement d'un côté du tube de mesure par rapport au plan longitudinal vertical (7) du tube de mesure, étant court-circuitées, notamment avec une pièce pliée découpée.

5. Procédé selon l'une des revendications 1 à 4, pour lequel le dispositif générateur de champ magnétique (5) - lequel est destiné à générer un champ magnétique perpendiculaire à la direction longitudinale (4) du tube de mesure dans le produit - comprend au moins une bobine en sellette ou au moins une pièce polaire avec une bobine rapportée.

6. Procédé selon l'une des revendications 1 à 5, pour lequel les électrodes sont disposées de manière axisymétrique par rapport au plan longitudinal vertical (7) du tube de mesure.

7. Procédé selon l'une des revendications 1 à 6, pour lequel deux électrodes voisines se trouvant respectivement sur un côté du tube de mesure (1) forment un angle $\delta = \alpha/(N - 1)$ dans la section transversale (9) du tube de mesure, un nombre naturel N correspondant au nombre de paires d'électrodes.

8. Procédé selon l'une des revendications 1 à 7, pour lequel un ajustement des angles $\alpha$ et $\beta$ est effectué par un procédé de simulation.

Fig. 1a

Fig. 1b

7

B1

B2

Fig.2a

7

90°R                                    R1

11

6                    10

90°R          6                          R2

11

Fig.2b

5

6.1　　　　6.2

U

12

Fig.3

# Fig.4

# Fig.5

**IN DER BESCHREIBUNG AUFGEFÜHRTE DOKUMENTE**

**In der Beschreibung aufgeführte Patentdokumente**

- DE 102014113408 A1
- CN 101294832 A
- DE 102015113390 A1
- EP 0878694 A1
- US 6094992 A1